# EUROPEAN PATENT APPLICATION

(11) **EP 2 008 888 A1**
(43) Date of publication of application: **31.12.2008**
(21) Application number: 06725834.3
(22) Date of filing: 31.03.2006
(51) Int. Cl.: B60S 1/36

(54) **VEHICLE WINDSCREEN WIPER**

(71) Applicant: Mecanizados Norte Bravo, S.L., Cantabria (ES)
(72) Inventor: MAROTO SOTO, José Antonio, E-47151 Boecillo, Valladolid (ES); CAÑIBANO ALVAREZ, Esteban, E-47151 Boecillo, Valladolid (ES); HURTADO PUENTES, Miguel, E- 47151 Boecillo (ES)
(74) Representative: Vicario Cubillo, Marcos
(86) International application number: PCT/ES2006/000160
(87) International publication number: WO 2007/113342

(57) **Abstract**

From a telescopic arm (1-2) whose initial section is fixed to the shaft of the drive motor (3) while the end section (2) ends in the classic wiper blade (4), with both sections related to each other by means of a collar-guide (5), the invention centres on joining by means of a moveable linkage (6) the lower end of the second section (2) of the telescopic arm to a tilting nucleus (7) in which two other tilting points (8-8') are included for their respective connecting rods (9-9'), which by means of moveable linkage (10-10') are joined to the fixed part of the vehicle, all in such a way that the lateral tilt of the telescopic arm entails its progressive lengthening, from its intermediate position towards the two lateral positions, with the upper end of the blade generating a straight-line path that is finished on each side by means of arched paths.

## Description

### FIELD OF THE INVENTION

This invention refers to windscreen wipers, that is, a mechanism that activates the wiper blade that normally cleans the windscreen of a vehicle, a mechanism capable of noticeably expanding the area swept with respect to a semicircle, thanks to a telescopic movement of the oscillating arm.

The purpose of the invention is to get a windscreen wiper, of simple construction, double movement, valid for its use on both the front and back windscreen of the vehicle, which does not require for the complete cleaning of the glass more than a single blade that is activated by a single motor, occupying a minimum space.

### BACKGROUND OF THE INVENTION

As is well known, conventional windscreen wiper systems widen the area of the glass swept in each cycle by using two blades. The synchronisation and functioning of both blades is generally done by means of a single motor and a steering system, that uses the space between the lower area of the glass and the motor housing for its location.

This area of the vehicle that traditionally had no other use, is beginning to be used at present to house pedestrian protection systems in case of being run over, for which reason it is imperative to reduce the space occupied by the windscreen wiper system.

One possible solution to the above problem consists of using the system based on a single blade, with an oscillating and telescopic movement, so that it maximises the area it sweeps in each cycle, keeping the total space occupied by the system in a minimum space.

In this regard it is possible to cite documents DE4020566 and EP0218192, in which an extensible oscillating arm is used, synchronised with the rotation by means of a connecting rod-handle.

In EP0210477 the extensible oscillating arm is synchronised with the rotation by means of a rack and pinion.

In FR2563788 there appears an extensible arm system by means of the slide joined to said arm. The movement passes from the motor to the oscillating connecting rod by means of a connecting rod-handle mechanism.

In FR2611627 the extensible arm system is achieved thanks to an intermediary connecting rod and the area is expanded with respect to the semicircle in the central area, with the ends remaining the same.

In FR2645812 there appears an extensible arm system, by means of a rack and pinion system.

In GB1367869, an extensible oscillating arm system is observed, which uses two connecting rods and a rack and pinion coupling.

All the above documents present as the common denominator the fact of the synchronisation between the oscillation movement and the extension and compression of the telescopic arm, implemented with precision mechanical solutions that require manufacturing processes with skilled adjustment.

This form of designing and producing, due to the necessary precision, has a negative effect on the economic aspect, making the final product more expensive.

### DESCRIPTION OF THE INVENTION

The windscreen wiper that the invention proposes solves in a fully satisfactory way the problem mentioned above by achieving a large area swept with a single blade, by means of a telescopic and oscillating arm aided by movement-controlling elements that do not require skilled adjustment, that is, they do not require precision mechanical processes, thus obtaining a substantial reduction in cost.

More specifically, the telescopic arm that presents an initial section joined to the motor shaft and lateral tilt and, alternatively to the latter, it ends in a collar-guide for the axial displacement of the second section or end section, the holder of the blade, with the particularity being that this end section, contrary to the mentioned blade, is joined by a moveable linkage to a nucleus, preferably triangular, that by means of two other moveable linkages provided in the other two vertices joins the respective connecting rods, also in a moveable linked way at fixed points of the vehicle. In this way, from an intermediate position of the blade, in which the aforementioned lower connecting rods adopt symmetrical positions, when the motor tilts in a certain direction, a simultaneous tilt is produced of the telescopic arm, and an also simultaneous lengthening of said arm, so that the blade describes through its upper end a perceptibly straight and horizontal path until reaching the place of maximum extension for said telescopic arm, which is determined by the location of the connecting rods next to that of their alignment, the limit after which the advance of the telescopic arm in its tilt describes a curved path for the free end of the blade, with a radius of constant curvature, defined by this maximum length of the telescopic arm.

### DESCRIPTION OF THE DRAWINGS

In order to complement the description that is presented herein and for the purpose of providing a better understanding of the characteristics of the invention, in accordance with a preferable example of its practical realisation, a set of drawings is attached as a integral part of said description, the following has been represented which serves as an example but is not limited to it:
Figure 1 - Shows an outline representation of the frontal elevation of the mechanical system that participates in the windscreen wiper system for vehicles, subject of this invention.
Figure 2 - Shows, with a view in perspective, an example of the practical realisation of the windscreen wiper outlined in the above figure.
Figure 3 - Shows a view of the frontal elevation of the windscreen wiper of the previous figure, in its intermediate position with respect to the windscreen of the vehicle.
Figure 4 - Shows a representation similar to that of figure 3 corresponding to an intermediate position of the path of the blade, specifically to the point of inflection between the straight path and the curved path of the end of said blade.
Figure 5 - Shows, finally, another representation similar to that of figures 3 and 4, but corresponding to the end displacement phase of the blade.

### PREFERABLE REALISATION OF THE INVENTION

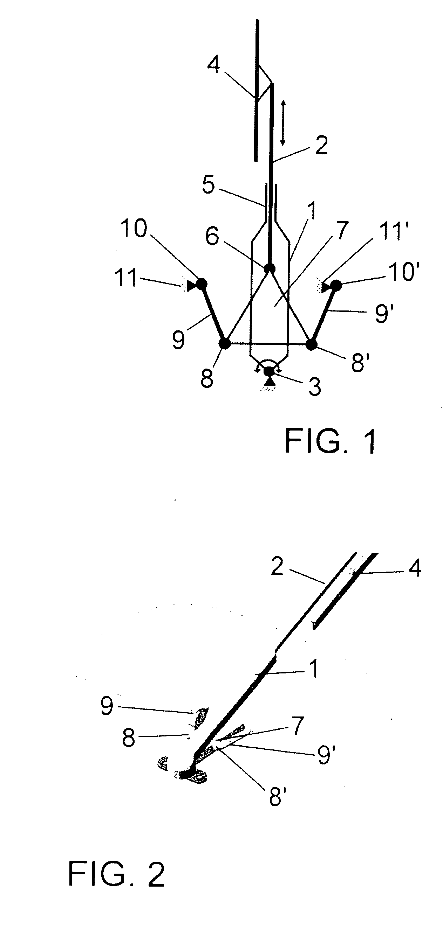

In view of the indicated figures, especially figures 1 and 2, one can observe how the windscreen wiper, which is the invention, proposes being constituted of a telescopic arm in which consists of an initial (1) section and an end section (2), the first joined by one of its ends to the drive motor shaft (3), which it accompanies in its alternating movement, and the second ending in a single blade (4); with the initial section (1) having a collar-guide (5) or any other similar element that permits the relative telescopic displacement between both sections (1-2).

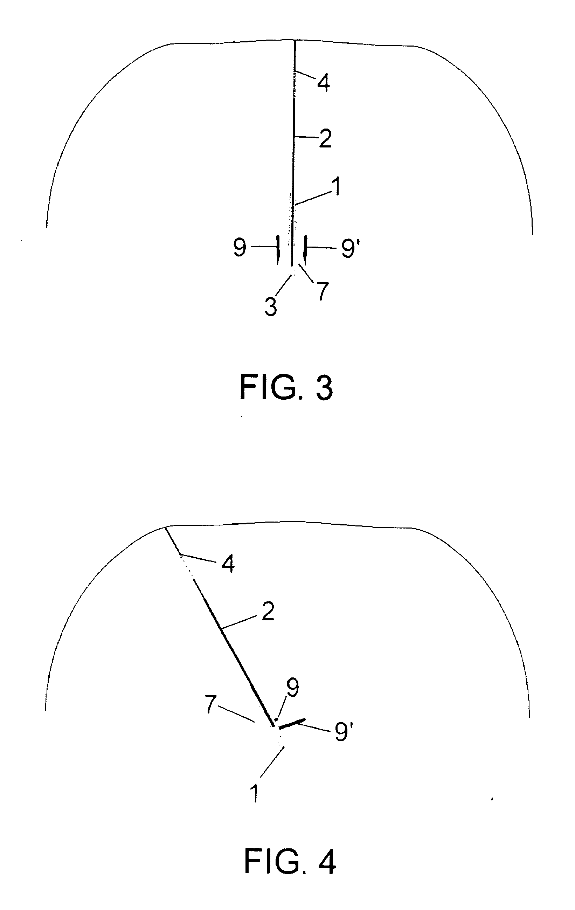

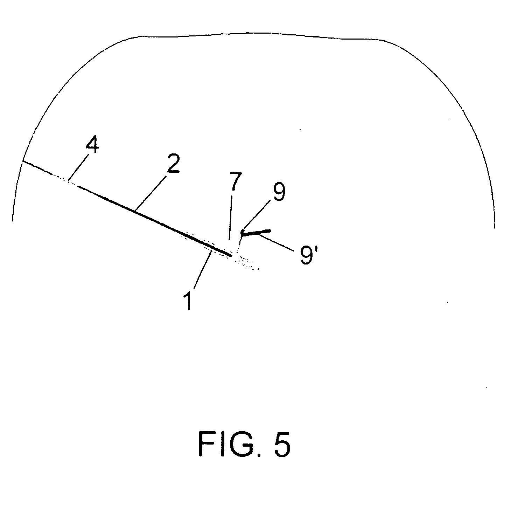

The end section (2) of the telescopic arm, in its lower end or opposite the blade (4) is joined by a moveable linkage (6) to a nucleus (7) also tilting, preferably of an isosceles triangular shape, but in any case, provided with three points of moveable linkages, the one already mentioned (6) for the second section (2) of the telescopic arm, and the other two points of moveable linkage (8-8') for the respective connecting rods (9-9') that in turn and by means of moveable linkages (10-10') are joined at fixed points of the vehicle, so that the simple tilting of the telescopic arm (1-2) generates an action in the nucleus (7) and in the connecting rods (9-9') that, from the intermediate position shown in figure 3, entails the telescopic arm (1-2) progressively becoming longer and parallel to said tilt, until reaching the position shown in figure 4 and that corresponds to the maximum length of said telescopic arm, from which it maintains its length constant until its total tilt, as shown in figure 5, with which the blade (4) and more specifically, its upper end, describes a path that is similar to an isosceles trapezium, visible in any of the figures 2 to 5, based on a significantly straight-line intermediate section of considerable size, and two curved end sections, that all together substantially approximate both in shape and in dimension the windscreen of the vehicle.

## Claims

1. The windscreen wiper for vehicles, of the type that has a telescopic arm with two sections, an initial one that receives the movement from the motor and that has a collar-guide for the displacement of a second end section that holds the blade, **characterised** because while the initial section (1) of the telescopic arm is joined by its lower end to the shaft (3) of the drive motor, the end section (2) is also associated by its lower end through a moveable linkage (6) to a tilting nucleus (7) in which another two points of moveable linkage (8-8') are established that relate said nucleus (7) to a pair of fixed and symmetrical points (11-11') of the vehicle, through respective connecting rods (9-9'), that are joined to those points (11-11') through moveable linkages (10-10') with said connecting rods (9-9'), duly sized so that the upper end of the blade (4) describes a straight intermediate section in its path, of considerable length, and two arched end sections, appreciably parallel to the upper-side area of the windscreen of the vehicle.
